# EUROPÄISCHE PATENTANMELDUNG

(11) **EP 2 391 088 A2**
(43) Veröffentlichungstag der Anmeldung: **30.11.2011**
(21) Anmeldenummer: 11167512.0
(22) Anmeldetag: 25.05.2011
(51) Int. Cl.: H04L 29/06

(54) **Erkennung unsicherer Datenverbindungen in einem Datennetzwerk**

(30) Priorität: 27.05.2010 DE 102010017108
(71) Anmelder: Tunney, Derek, 64293 Darmstadt (DE)
(72) Erfinder: Tunney, Derek, 64293 Darmstadt (DE)
(74) Vertreter: Katscher Habermann Patentanwälte

(57) **Zusammenfassung**

Die Erfindung betrifft ein Erkennungsverfahren zur Erkennung unsicherer Datenverbindungen in einem Datennetzwerk, bei dem eine Anfrageeinheit (1) über mindestens eine Weiterleitungseinheit (3) mit einer Zieleinheit (2) datenübertragend mittels geeigneter Datentransferprotokolle zur Übertragung von Daten innerhalb des Datennetzwerks verbunden wird, und bei dem die Anfrageeinheit (1) mit mindestens einer
Datenverarbeitungseinheit (6), die Teil eines sicheren Datennetzes (5) ist, mittels geeigneter
Datentransferprotokolle zur sicheren Übertragung von Daten innerhalb des Datennetzwerks verbunden wird, dadurch gekennzeichnet, dass bevor die Anfrageeinheit (1) mit der Zieleinheit (2) verbunden wird, die Anfrageeinheit (1) eine Zieleinheitsverbindungsanfrage an das sichere Datennetz (5) sendet und das sichere Datennetz (5) auf Basis von Sicherheitsinformationen über das Datennetzwerk eine datenübertragende Verbindung zu einer Zieleinheit (2) aufbaut, wobei das Sicherheitsniveau der Datenverbindung einer Sicherheitsniveauvorgabe entspricht.

## Beschreibung

Die Erfindung betrifft ein Erkennungsverfahren zur Erkennung unsicherer Datenverbindungen in einem Datennetzwerk, bei dem eine Anfrageeinheit über mindestens eine Weiterleitungseinheit mit einer Zieleinheit datenübertragend mittels geeigneter Datentransferprotokolle zur Übertragung von Daten innerhalb des Datennetzwerks verbunden wird, und bei dem die Anfrageeinheit mit mindestens einer Datenverarbeitungseinheit, die Teil eines sicheren Datennetzes ist, mittels geeigneter Datentransferprotokolle zur sicheren Übertragung von Daten innerhalb des Datennetzwerks verbunden wird. Die Erfindung betrifft auch ein Erkennungssystem mit einer Anfrageeinheit, mindestens einer Datenverarbeitungseinheit, die durch ein sicheres Datennetz verbindbar sind, wobei die Anfrageeinheit mit mindestens einer Authentifizierungsvorrichtung verbunden ist und Mittel aufweist, um über eine sichere Verbindung Daten mit mindestens einer Datenverarbeitungseinheit auszutauschen, und wobei die mindestens eine Datenverarbeitungseinheit Mittel aufweist, um über eine sichere Verbindung Daten mit mindestens einer anderen Datenverarbeitungseinheit und mit der Anfrageeinheit auszutauschen. Die Erfindung betrifft weiterhin ein Computerprogrammprodukt zur Benutzung in einem sicheren Datennetz oder auf einer Datenverarbeitungseinheit, wobei das Computerprogrammprodukt ein oder mehrere computerlesbare Medien umfasst, die computerausführbare Anweisungen auf sich gespeichert haben.

Datennetzwerke, wie zum Beispiel das Internet, bestehen aus einer Vielzahl von Geräten, die miteinander in einer Datenverbindung stehen. Diese Geräte müssen dazu geeignet sein, Daten über die Datenverbindung auszutauschen. Dabei kann es sich zum Beispiel um Router, Server, Splitter oder dergleichen und Endgeräte wie PCs etc. handeln. Die Datenverbindungen können zum Beispiel über elektrische oder optische Kabel, über Satellitenverbindung, oder drahtlos per Funk aufgebaut werden. Auch Kombinationen dieser verschiedenen Datenverbindungswege innerhalb eines Netzwerks sind möglich.

Um den Datenaustausch zwischen den verschiedenen Geräten innerhalb des Datennetzes sicher zu gestalten sind verschiedene Verfahren bekannt. Ein gängiges Verfahren ist beispielsweise die Nutzerauthentifizierung. Bei diesem Verfahren wird ein Nutzer zum Beispiel dazu aufgefordert einen Nutzernamen und ein Passwort einzugeben, um sicherzustellen, dass der Nutzer berechtigt ist eine Datenverbindung zwischen der vom Nutzer bedienten Anfrageeinheit und der Zieleinheit aufzubauen. Darüber hinaus sind weitaus sichere Authentifizierungsverfahren wie beispielsweise das Transport-Layer-Security-Verfahren (TLS) bekannt. Neben der sichereren Authentifizierung bieten diese Verfahren auch fortschrittliche Verschlüsselungsverfahren zur Verschlüsselung der Datenverbindung.

Üblicherweise stellen diese fortschrittlichen Authentifizierungs- und Verschlüsselungsverfahren asymmetrische Kryptosysteme dar. Bei asymmetrischen Kryptosystemen kommt ein Schlüsselpaar, bestehend aus einem öffentlichen Schlüssel und einem privaten Schlüssel, zum Einsatz. Eine Zieleinheit innerhalb des Datennetzwerks, das eine verschlüsselte Verbindung zu einer Anfrageeinheit aufbauen möchte, ist im Besitz beider Schlüssel. Zum Aufbau der Verbindung sendet die Zieleinheit den öffentlichen Schlüssel an die Anfrageeinheit. Die Anfrageeinheit benutzt diesen öffentlichen Schlüssel, um seine Nachrichten zu verschlüsseln. Anschließend versendet die Anfrageeinheit die verschlüsselte Nachricht an die Zieleinheit, die den privaten Schlüssel dazu nutzt, die verschlüsselte Nachricht zu entschlüsseln. Die Zieleinheit kann den öffentlichen Schlüssel bedenkenlos herausgeben, da die verschlüsselte Nachricht nur mit Hilfe des privaten Schlüssels entschlüsselt werden kann.

Um sicher zu stellen, dass der von der Anfrageeinheit empfangene öffentliche Schlüssel auch der Zieleinheit zuzuordnen ist, werden Zertifikate eingesetzt. Ein Zertifikat beinhaltet verschiedene Informationen über den öffentlichen Schlüssel und dessen Inhaber. Ein Benutzer der Anfrageeinheit muss beim Erhalt des Zertifikats entscheiden, ob das Zertifikat und dem zufolge der dazugehörige öffentliche Schlüssel vertrauenswürdig ist.

Für einen durchschnittlich erfahrenen Benutzer einer Anfrageeinheit ist die Bewertung eines Zertifikats zeitraubend, da die Zertifikate eine Vielzahl von Informationen beinhalten, die vom Nutzer überprüft werden müssen. Im Alltag ist für eine ausführliche Prüfung der Zertifikate häufig keine Zeit. Zudem fehlt es den normalen Nutzern oft an dem erforderlichen Hintergrundwissen, um Zertifikate richtig einschätzen zu können. Durch die häufigen Anfragen, ein Zertifikat beurteilen zu müssen, fühlen sich die Nutzer daher häufig gestört und bestätigen Zertifikate pauschal, um weiter arbeiten zu können.

Allerdings sind die Folgen einer Fehlentscheidung schwerwiegend. Befindet sich eine Weiterleitungseinheit logisch oder physikalisch zwischen der Anfrageeinheit und der Zieleinheit in dem Datennetzwerk, und ist die Weiterleitungseinheit dazu in der Lage den kompletten Datenstrom zwischen der Anfrageeinheit und der Zieleinheit zu kontrollieren, so kann die Weiterleitungseinheit den öffentlichen Schlüssel und das Zertifikat der Zieleinheit empfangen, einen weiteren öffentlichen Schlüssel und ein weiteres Zertifikat, die der Weiterleitungseinheit zuzuordnen sind, an die Anfrageeinheit senden, welche, falls sie das weitere Zertifikat akzeptiert, den weiteren öffentlichen Schlüssel dazu nutzt, ihre Daten zu verschlüsseln und an die Weiterleitungseinheit zu senden, welche den zugehörigen weiteren privaten Schlüssel dazu verwendet, die Nachricht zu entschlüsseln, den ersten öffentlichen Schlüssel nutzt, um die Nachricht zu verschlüsseln und an die Zieleinheit zu senden. Auf diese Weise erlangt der Benutzer der Weiterleitungseinheit Kenntnis vom Inhalt der Nachricht. Dies wird üblicherweise als Man-in-the-Middle-Angriff bezeichnet.

Zur Vermeidung solcher oder ähnlicher Angriffe, wie zum Beispiel ARP-Spoofing, sind verschiedene Weiterentwicklungen der beschriebenen Authentifizierungs-und Verschlüsselungsverfahren bekannt. So existieren beispielsweise kommerzielle und nichtkommerzielle Zertifizierungsstellen, die die eigentlichen Zertifikate wiederum zertifizieren. Diese Zertifikate müssen aber ebenfalls beurteilt werden. Zudem ist dies ein Service des Betreibers der Zieleinheit und wird nur von wenigen bereit gestellt. Eine Lösung des Problems durch Zertifikate erscheint daher nicht zielführend zu sein.

Folglich ist es Aufgabe dieser Erfindung, einem durchschnittlichen Benutzer einen Dienst bereitzustellen, der ihm die Entscheidung, ob eine Datenverbindung vertrauenswürdig ist, erleichtert oder abnimmt.

Diese Aufgabe wird erfindungsgemäß dadurch gelöst, dass vor der Herstellung einer Datenverbindung zwischen der Anfrageeinheit und der Zieleinheit die Anfrageeinheit eine Zieleinheitsverbindungsanfrage an das sichere Datennetz sendet und das sichere Datennetz auf Basis von Sicherheitsinformationen über das Datennetzwerk eine datenübertragende Verbindung zu der Zieleinheit aufbaut, wobei das Sicherheitsniveau der Datenverbindung einer Sicherheitsniveauvorgabe entspricht. Beispielsweise könnte ein Benutzer Details eines Bankkontos über eine sichere Datenverbindung abfragen wollen. Die Kontoinformationen werden durch die Zieleinheit bereitgestellt. Da es dem Benutzer nicht möglich erscheint, die Sicherheit der aufgebauten Datenverbindung einzuschätzen, baut er eine sichere Datenverbindung zu dem sicheren Datennetz auf und sendet eine Zieleinheitsverbindungsanfrage an das sichere Datennetz. Das sichere Datennetz stellt eine der Sicherheitsniveauvorgabe entsprechend sichere Datenverbindung zu der Zieleinheit automatisch her. Die Entscheidung über die Sicherheit einer Datenverbindung wird dem Nutzer durch diesen Dienst also abgenommen. Ein solcher Service ist auch insbesondere für Unternehmen interessant, da diese zum Beispiel sämtliche verschlüsselte Datenverbindungen über das sichere Datennetz aufbauen können. Auf diese Weise werden die Mitarbeiter entlastet und dem Unternehmen wird ein bestimmtes Sicherheitsniveau gewährleistet.

Darüberhinaus möchte der Benutzer eine möglichst sichere Datenverbindung aufbauen. Daher ist vorgesehen, dass die Anfrageeinheit eine Sicherheitsniveauvorgabe zusammen mit der Zieleinheitsverbindungsanfrage oder nach der Zieleinheitsverbindungsanfrage an das sichere Datennetz sendet. Es ist aber auch möglich, dass das sichere Datennetz automatisch eine Sicherheitsniveauvorgabeanfrage an die Anfrageeinheit sendet und eine Sicherheitsniveauvorgabe von der Anfrageeinheit empfängt. Das Sicherheitsniveau kann dabei zum Beispiel in Kategorien eingeteilt sein, denen unterschiedliche Preise zugeordnet sind. Ein Nutzer kann dann zwischen verschiedenen, unterschiedlich teuren Sicherheitsniveaus wählen. Im Anschluss wertet das sichere Datennetz automatisch die ihm zur Verfügung stehenden Sicherheitsinformationen aus.

Vorteilhafterweise ist vorgesehen, dass die Sicherheitsinformationen aus einer mit dem sicheren Datennetz verbundenen Sicherheitsinformationsdatenbank abgefragt werden. Bei diesen Sicherheitsinformationen kann es sich beispielsweise um Informationen darüber handeln, wie sicher eine Weiterleitungseinheit in der Vergangenheit eingestuft wurde, ob sich eine Weiterleitungseinheit in einer räumlichen Region befindet, in der
Sicherheitsangriffe häufiger auftreten oder ob die Zieleinheit in der Vergangenheit bereits
Sicherheitsangriffen ausgesetzt war. Falls es zur Erfüllung der Sicherheitsniveauvorgabe nötig ist, kann sich das sichere Datennetz darüberhinaus automatisch weitere Sicherheitsinformationen beschaffen, die in die Beurteilung der verschiedenen Verbindungsoptionen einfließen. Anschließend baut das sichere Datennetz automatisch eine Datenverbindung zwischen der Anfrageeinheit und der Zieleinheit auf. Dabei kann die Datenverbindung über verschiedene Datenverarbeitungseinheiten in dem sicheren Datennetz und über verschiedene Weiterleitungseinheiten, die nicht dem sicheren Datennetz angehören, führen. Die Datenverarbeitungseinheiten sind so ausgestaltet, dass sie die entsprechenden Anfragen alleine oder unter Zuhilfenahme anderer Datenverarbeitungseinheiten des sicheren Datennetzes bearbeiten können.

Vorteilhafterweise werden die Sicherheitsinformationen über das Datennetzwerk durch Auswertung von Verbindungsdaten von Datenverbindungen mit mindestens einer Weiterleitungseinheit, die nicht Teil des sicheren Datennetzes ist, gewonnen. Außerdem ist es vorteilhaft, dass die Sicherheitsinformationen über das Datennetzwerk durch Auswertung von Verbindungsdaten von Datenverbindungen zur Zieleinheit gewonnen werden. Bei den Verbindungsdaten kann es sich zum Beispiel um charakteristische Wegpunkte früherer Datenverbindungen über die mindestens eine Weiterleitungseinheit zu der Zieleinheit handeln, um Zertifikate, die das sichere Datennetz von der Zieleinheit über die mindestens eine Weiterleitungseinheit empfangen hat, oder um einen Bezeichner wie zum Beispiel eine URL handeln, unter der die Zieleinheit üblicherweise erreichbar ist. Diese Verbindungsdaten können durch das sichere Datennetz automatisch beispielsweise über Testdatenverbindungen gewonnen werden, die mittels geeigneter Protokolle aufgebaut werden. Bei diesen Protokollen kann es sich zum Beispiel um Transferprotokolle wie TCP, UDP oder SCTP gegebenenfalls in Verbindung mit einem proprietären Übertragungsprotokoll oder einem der bekannten Übertragungsprotokolle wie FTP oder HTTP handeln. Außerdem ist es denkbar, dass die Datenverbindung mit einem Authentifizierungs- und Verschlüsselungsverfahren wie TLS aufgebaut werden.

Eine vorteilhafte Ausgestaltung des Erkennungsverfahrens sieht vor, dass die Verbindungsdaten aus einer mit dem sicheren Datennetz verbundenen Verbindungsdatenbank abgefragt werden. Diese historischen Daten können zu einer aktuellen Zieleinheitsverbindungsanfrage wertvolle Sicherheitsinformationen liefern. So kann beispielsweise automatisch ermittelt werden, dass Datenverbindungen über bestimmte Weiterleitungseinheiten in der Vergangenheit häufig als unsicher eingestuft wurden beziehungsweise Unregelmäßigkeiten in den Verbindungsdaten beobachtet wurden, so dass bestimmte Datenverbindungswege nicht berücksichtigt werden sollten.

Vorteilhafterweise ist vorgesehen, dass zwischen dem sicheren Datennetz und der Zieleinheit mindestens eine Datenverbindung über mindestens eine Weiterleitungseinheit zur Gewinnung von Verbindungsdaten der mindestens einen Datenverbindung aufgebaut wird. Ist beispielsweise die Auswertung historischer Verbindungdaten zur Ermittlung einer Datenverbindung, die das vorgegebene Sicherheitsniveau erfüllt, nicht möglich, so können aktuelle Verbindungdaten von dem sicheren Datennetz automatisch ermittelt werden. Zum Beispiel kann das sichere Datennetz über einen oder mehrere zugehörige Datenverarbeitungseinheiten mehrere Zertifikate der Zieleinheit anfordern und die Zertifikatantworten auswerten.

Erfindungsgemäß wird vorgeschlagen, dass es sich bei den Verbindungsdaten um mindestens zwei
Verbindungsanfrageantworten der Zieleinheit handelt, wobei sich die zur Übertragung der Verbindungsanfrageantworten genutzten Datenverbindungswege mindestens teilweise unterscheiden. Beispielsweise kann es sich bei den Verbindungsanfrageantworten um Zertifikatantworten handeln. Auf diese Weise erhält das sichere Datennetz mindestens zwei öffentliche Schlüssel und mindestens zwei Zielzertifikate. Angenommen, es werden auf diese Weise drei Zielzertifikate vom sicheren Netzwerk empfangen und ein Man-in-the-Middle kontrolliert einen der drei zugehörigen Datenverbindungen, so kann bereits durch einen einfachen Vergleich der drei Zielzertifikate auf die von dem Man-in-the-Middle kontrollierte Datenverbindung geschlossen werden, da sich das über diese Datenverbindung erhaltene Zertifikat von den über die beiden anderen Datenverbindungen erhaltenen Zielzertifikate unterscheidet. Die beiden anderen Datenverbindungen, über die das sichere Datennetz die gleichen Zielzertifikate erhalten hat, können also als sicherer als die dritte Verbindung eingestuft werden.

Eine weitere vorteilhafte Ausgestaltung des Erkennungsverfahrens sieht vor, dass es sich bei den Verbindungsdaten um mindestens zwei Verbindungsanfrageantworten der Zieleinheit handelt, die eine Datenverarbeitungseinheit zu unterschiedlichen Zeitpunkten angefordert hat. Bei den Verbindungsanfrageantworten kann es sich beispielsweise um Zertifikatantworten handeln. Auf diese Weise kann überprüft werden, ob ein Zertifikat geändert wurde. Üblicherweise besitzen Zertifikate Gültigkeitsdauern. Das Ablaufdatum wird regelmäßig in dem Zertifikat vermerkt. Demzufolge kann überprüft werden, ob ein noch gültiges Zertifikat geändert wurde. Eine solche Änderung kann durch eine Man-in-the-Middle-Attacke ausgelöst sein. Daher stellt der zeitliche Vergleich von Zertifikaten ebenfalls eine wertvolle Sicherheitsinformation dar.

Eine weitere Modifikation des Erkennungsverfahrens sieht vor, dass es sich bei den Verbindungsdaten um charakteristische Wegpunkte der Datenverbindungen von einer Datenverarbeitungseinheit über die mindestens eine Weiterleitungseinheit zu der Zieleinheit handelt. Solche charakteristischen Wegpunkte können beispielsweise durch Traceroute-Softwareprogramme ermittelt werden. Diese Software-Programme ermitteln zum Beispiel die Router, über die Datenpakete von einer Datenverarbeitungseinheit zu der Zieleinheit vermittelt werden. Üblicherweise werden auch nachfolgende Datenverbindungen über diese
charakteristischen Wegpunkte zu der Zieleinheit geleitet. Es ist auch möglich sichere und unsichere Bereiche des Datennetzes zu bestimmen, durch die die aufzubauende sichere Datenverbindung führen wird. Diese Informationen könnten mit in der Vergangenheit ermittelten Sicherheitsinformationen ausgewertet werden. Würde beispielsweise ein möglicher Weg einer aufzubauenden Datenverbindung von einer Datenverarbeitungseinheit zu einer Zieleinheit über einen in der Vergangenheit als unsicher eingestuften Weg führen, und ein möglicher Weg von einer anderen Datenverarbeitungseinheit zu der Zieleinheit über einen in der Vergangenheit als sicher eingestuften Weg, wäre es bei sonst gleichen Voraussetzungen sinnvoll, die Datenverbindung über den in der Vergangenheit als sicher eingestuften Weg aufzubauen.

Vorteilhafterweise werden zur Ermittlung von Sicherheitsinformationen verwendbare Verbindungsdaten früherer Testdatenverbindungen und aufgebauter Datenverbindungen in einer zentralen oder dezentralen Datenbank gespeichert. Auf diese Weise können einmal ermittelte Verbindungsdaten zur Gewinnung von Sicherheitsinformationen für zukünftige
Zieleinheitsverbindungsanfragen genutzt werden.

Eine besonders vorteilhafte Ausgestaltung des Erkennungsverfahrens sieht vor, dass das sichere Datennetz eine Zielsicherheitsinformation an die Anfrageeinheit sendet. Es kann beispielsweise vorkommen, dass eine Zieleinheit selbst als unsicher eingestuft wird. In diesem Fall kann die Sicherheitsniveauvorgabe nicht erfüllt werden, so dass das sichere Datennetz zunächst eine Zielsicherheitsinformation an die Abfrageeinheit sendet, statt direkt eine Datenverbindung aufzubauen. Diese Zielsicherheitsinformation kann zum Beispiel Informationen über die unsichere Zieleinheit enthalten. Eine Zielsicherheitsinformation kann aber auch generell an die Anfrageeinheit zur Information gesendet werden. Zudem könnte vorgesehen sein, dass der Benutzer der Anfrageeinheit auch eine Zielsicherheitsinformation vom sicheren Datennetz anfordert und anschließend erhält.

Vorteilhafterweise ist weiter vorgesehen, dass das sichere Datennetz eine Wegsicherheitsinformation an die Anfrageeinheit sendet. Es ist beispielsweise möglich, dass keine der möglichen Datenverbindungen zu einer Zieleinheit das vorgegebene Sicherheitsniveau erfüllt. In diesem Fall kann das sichere Datennetz zunächst eine Wegsicherheitsinformation an die Abfrageeinheit senden, bevor eine Datenverbindung aufgebaut wird. Auch eine Wegsicherheitsinformation könnte generell an die Anfrageeinheit gesendet werden oder von dem Benutzer der Anfrageeinheit angefordert und anschließend erhalten werden.

Eine Modifikation des Erkennungsverfahrens sieht vor, dass die Anfrageeinheit eine Bandbreitenniveauvorgabe an das sichere Datennetz sendet und das sichere Datennetz eine Verbindung zu einer Zieleinheit aufbaut, wobei das Bandbreitenniveau der Verbindung der Bandbreitenniveauvorgabe entspricht. Hierdurch wird einem Benutzer ermöglicht nur eine solche Datenverbindung aufbauen zu lassen, die eine vorgebbare Anforderung an die Datenübertragungsrate erfüllt.

Bei einer vorteilhaften Ausgestaltung des
Erkennungsverfahrens ist vorgesehen, dass die Anfrageeinheit zu dem sicheren Datennetz gehört und so für eine andere Anfrageeinheit die Aufgaben einer Datenverarbeitungseinheit ausführen kann. Auf diese Weise ist es möglich, dass sichere Datennetz zu vergrößern und beispielsweise weitere Datenverbindungswege zu erschließen.

Eine Modifikation des Erkennungsverfahrens sieht vor, dass zum Aufbau der sicheren Verbindung zwischen der Anfrageeinheit und der mindestens einen Datenverarbeitungseinheit der Benutzer der Anfrageeinheit authentifiziert wird. Auf diese Weise kann der Nutzung einer Anfrageeinheit durch einen nicht autorisierten Benutzer besser vorgebeugt werden. Als Authentifizierungsvorrichtung kommen beispielsweise Chipkartenleser in Frage. Ein autorisierter Benutzer ist im Besitz einer Chipkarte, die von dem Chipkartenleser ausgelesen wird. Gemeinsam mit zum Beispiel einem Passwort, das der Benutzer eingeben muss, kann der Benutzer auf diese Weise sicherer identifiziert werden, da ein nicht autorisierter Dritter sowohl im Besitz der Chipkarte sein müsste, als auch Kenntnis von dem Passwort erlangt haben müsste, um sich als autorisierter Benutzer auszugeben. Vorteilhafterweise ist vorgesehen, dass zum Aufbau der sicheren Verbindung zwischen der Anfrageeinheit und der Datenverarbeitungseinheit mindestens ein biometrisches Merkmal des Benutzers der Anfrageeinheit erfasst wird. Biometrische Merkmale, wie zum Beispiel ein Fingerabdruck, sind dazu geeignet, einen autorisierten Benutzer eindeutig zu identifizieren. Solche Merkmale bieten zudem den Vorteil, dass sie dem autorisierten Benutzer kaum entwendet werden können. Eine andere Möglichkeit wäre, ein genetisches Merkmal eines Benutzers zu erfassen. Es wird weiter vorgeschlagen, dass zur Authentifizierung des Benutzers Daten von mindestens einem Authentifizierungsdatenträger ausgelesen werden. Auf diesem Authentifizierungsdatenträger sind zum Beispiel biometrischen Vergleichsmerkmale des Benutzers gespeichert.

Vorteilhafterweise ist ein Erkennungssystem so ausgestaltet, dass sowohl die Anfrageeinheit als auch die Datenverarbeitungseinheit Mittel aufweisen, um das erfindungsgemäße Erkennungsverfahren durchzuführen.

Ein gesondertes oder zusammen mit geeigneter Hardware handelsfähiges Computerprogrammprodukt ist
vorteilhafterweise so ausgestaltet, dass die durch einen Prozessor ausgeführten Anweisungen das sichere Datennetz oder die Datenverarbeitungseinheit dazu veranlassen, das erfindungsgemäße Erkennungsverfahren auszuführen.

Weitere Einzelheiten der Erfindung werden in den Zeichnungen anhand der schematisch dargestellten Ausführungsbeispiele beschrieben.

Es zeigt:
Figur 1 eine schematische Darstellung einer Datenverbindung mit einer Man-in-the-Middle Attacke, wie sie aus dem Stand der Technik bekannt ist,
Figur 2 eine schematische Darstellung des Verbindungsaufbaus über ein sicheres Datennetz,
Figur 3 eine schematische Darstellung, auf welche Weise eine Datenverarbeitungseinheit Sicherheitsinformationen über mögliche Datenverbindungen zu einer Zieleinheit gewinnt.

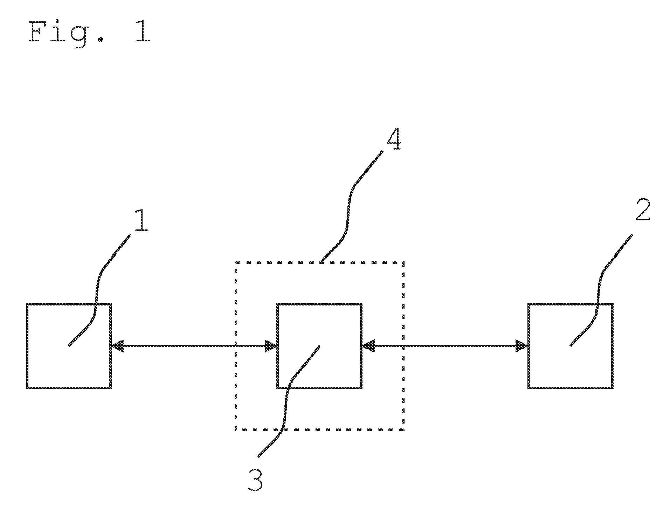

In Figur 1 ist schematisch eine Datenverbindung zwischen einer Anfrageeinheit 1 und einer Zieleinheit 2 über eine Weiterleitungseinheit 3 dargestellt, wobei die Datenverbindung von einer Man-in-the-Middle-Attacke betroffen ist. Die Anfrageeinheit 1 sendet eine Zertifikatanfrage an die Zieleinheit 2 über die Weiterleitungseinheit 3, die von einer Man-in-the-Middle-Software 4 kontrolliert wird. Die Man-in-the-Middle-Software 4 empfängt die Zertifikatsanfrage der Anfrageeinheit 1, sendet die Zertifikatsanfrage an die Zieleinheit 2 weiter, empfängt das Zertifikat der Zieleinheit 2, und sendet ein anderes Zertifikat an die Anfrageeinheit 1. Die Anfrageeinheit 1 nutzt den mit dem Zertifikat verbundenen öffentlichen Schlüssel zur Verschlüsselung des Datenstroms. Dieser Datenstrom wird nun an die Weiterleitungseinheit 3 gesendet. Die Man-in-the-Middle-Software 4 nutzt den ihr zugeordneten privaten Schlüssel zur Entschlüsselung des Datenstroms, verschlüsselt diesen Datenstrom mit dem öffentlichen Schlüssel der Zieleinheit 2 und sendet diesen Datenstrom an die Zieleinheit 2. Auf diese Weise entschlüsselt die Man-in-the-Middle-Software 4 den Datenstrom zwischen der Anfrageeinheit 1 und der Zieleinheit 2 und macht ihn für einen unbekannten Personenkreis zugänglich.

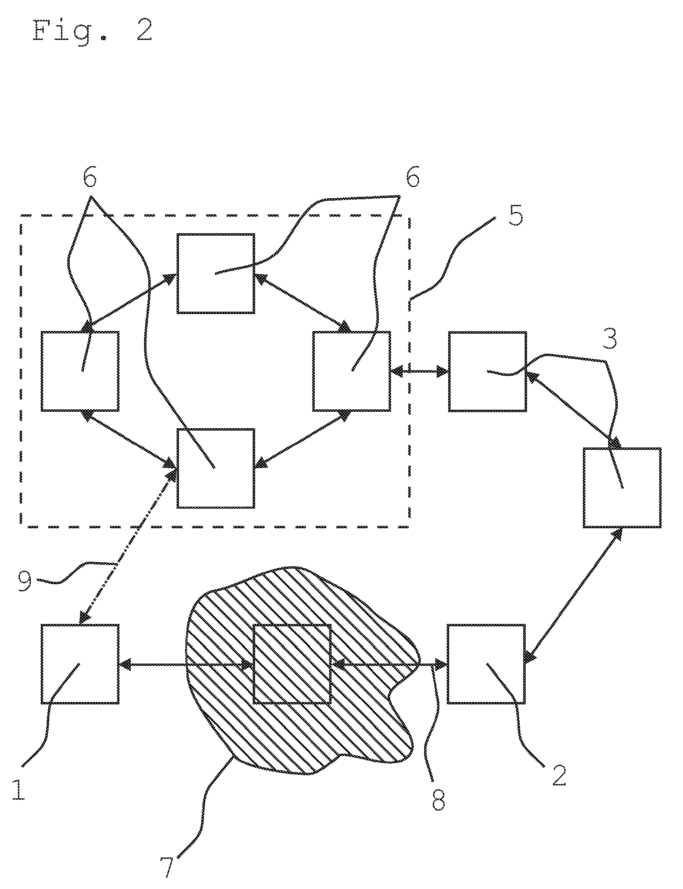

In Figur 2 ist schematisch ein erfindungsgemäßer Datenverbindungsaufbau von einer Anfrageeinheit 1 zu einer Zieleinheit 2 über ein sicheres Datennetz 5, bestehend aus vier Datenverarbeitungseinheiten 6, und zwei Weiterleitungseinheiten 3 dargestellt. Der Bereich 7 kennzeichnet einen potentiell unsicheren Teil des Datennetzes. Eine mögliche Datenverbindung 8 von der Anfrageeinheit 1 zur Zieleinheit 2 führt durch diesen potentiell unsicheren Bereich 7. Es wird angenommen, dass ein Benutzer eine Datenverbindung von der Anfrageeinheit 1 zu der Zieleinheit 2 aufbauen möchte. Da üblicherweise die kürzeste Verbindung zwischen der Anfrageeinheit 1 und der Zieleinheit 2 aufgebaut wird, würde bei einem direkten Verbindungsaufbau von 1 zu 2 die Datenverbindung durch den potentiell unsicheren Bereich 7 des Datennetzes führen. Da der Benutzer die Gefahr des potentiell unsicheren Bereichs 7 nicht einschätzen kann, baut er eine sichere Datenverbindung 9 zu einer der Datenverarbeitungseinheiten 6 auf. Anschließend sendet er eine
Zieleinheitsverbindungsanfrage an das sichere Datennetz 5, das eine möglichst sichere Datenverbindung zu der
Zieleinheit 2 aufbauen soll. Das sichere Datennetz 5 wertet die ihm zur Verfügung stehenden Sicherheitsinformationen über mögliche Datenverbindungen und der Zieleinheit 2 aus und beschafft gegebenenfalls aktuelle Verbindungsdaten, um die möglichen Datenverbindungen noch besser bewerten zu können. Anschließend entscheidet das sichere Datennetz, dass die dargestellte Datenverbindung über die beiden Weiterleitungseinheiten 3 dem angeforderten Sicherheitsniveau entspricht und baut die Datenverbindung auf.

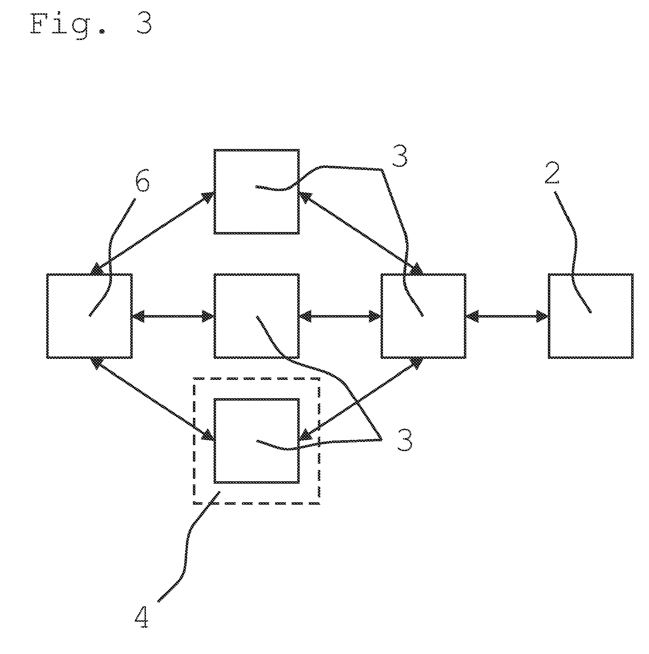

In Figur 3 ist schematisch dargestellt, auf welche Weise eine Datenverarbeitungseinheit 6 Sicherheitsinformationen über mögliche Datenverbindungen zu einer Zieleinheit 2 gewinnen kann. In diesem Beispiel kann eine Datenverbindung von der Datenverarbeitungseinheit 6 zu der Zieleinheit 2 auf drei verschiedenen Wegen durch das Datennetz aufgebaut werden. Eine der Datenverbindungen wird von einem Man-in-the-Middle 4 kontrolliert. Die Datenverarbeitungseinheit 6 baut nun beispielsweise mehrere Datenverbindungen zu der Zieleinheit 2 auf und nutzt dabei alle möglichen Datenverbindungswege. Bei jeder Datenverbindung fordert die Datenverarbeitungseinheit 6 zum Beispiel ein Zielzertifikat an. Die gewonnen Verbindungsdaten können nun von der Datenverarbeitungseinheit zusammen mit anderen Verbindungsdaten und historischen Sicherheitsinformationen verarbeitet werden. Im Beispiel könnte die vom Man-in-the-Middle 4 kontrollierter Datenverbindung bereits durch einen einfachen Vergleich der erhaltenen Zielzertifikate unterschieden werden.

## Patentansprüche

1. Erkennungsverfahren zur Erkennung unsicherer Datenverbindungen in einem Datennetzwerk, bei dem eine Anfrageeinheit (1) über mindestens eine Weiterleitungseinheit (3) mit einer Zieleinheit (2) datenübertragend mittels geeigneter Datentransferprotokolle zur Übertragung von Daten innerhalb des Datennetzwerks verbunden wird, und bei dem die Anfrageeinheit (1) mit mindestens einer Datenverarbeitungseinheit (6), die Teil eines sicheren Datennetzes (5) ist, mittels geeigneter Datentransferprotokolle zur sicheren Übertragung von Daten innerhalb des Datennetzwerks verbunden wird, **dadurch gekennzeichnet, dass** bevor die Anfrageeinheit (1) mit der Zieleinheit (2) verbunden wird, die Anfrageeinheit (1) eine Zieleinheitsverbindungsanfrage an das sichere Datennetz (5) sendet und das sichere Datennetz (5) auf Basis von Sicherheitsinformationen über das Datennetzwerk eine datenübertragende Verbindung zu einer Zieleinheit (2) aufbaut, wobei das Sicherheitsniveau der Datenverbindung einer Sicherheitsniveauvorgabe entspricht.

2. Erkennungsverfahren nach Anspruch 1, **dadurch gekennzeichnet, dass** die Anfrageeinheit (1) eine Sicherheitsniveauvorgabe zusammen mit der Zieleinheitsverbindungsanfrage oder nach der Zieleinheitsverbindungsanfrage an das sichere Datennetz (5) sendet.

3. Erkennungsverfahren nach Anspruch 1, **dadurch gekennzeichnet, dass** das sichere Datennetz (5) eine Sicherheitsniveauvorgabeanfrage an die Anfrageeinheit (1) sendet und eine Sicherheitsniveauvorgabe von der Anfrageeinheit (1) empfängt.

4. Erkennungsverfahren gemäß einem der Ansprüche 1 bis 3, **dadurch gekennzeichnet, dass** die Sicherheitsinformationen aus einer mit dem sicheren Datennetz (5) verbundenen Sicherheitsinformationsdatenbank abgefragt werden.

5. Erkennungsverfahren gemäß einem der Ansprüche 1 bis 4, **dadurch gekennzeichnet, dass** die Sicherheitsinformationen über das Datennetzwerk durch Auswertung von Verbindungsdaten von Datenverbindungen mit mindestens einer Weiterleitungseinheit (3), die nicht Teil des sicheren Datennetzes (5) ist, gewonnen werden.

6. Erkennungsverfahren gemäß einem der Ansprüche 1 bis 5, **dadurch gekennzeichnet, dass** die Sicherheitsinformationen über das Datennetzwerk durch Auswertung von Verbindungsdaten von Datenverbindungen zur Zieleinheit gewonnen werden.

7. Erkennungsverfahren nach Anspruch 5 oder Anspruch 6, **dadurch gekennzeichnet, dass** zwischen dem sicheren Datennetz (5) und der Zieleinheit (2) mindestens eine Datenverbindung über mindestens eine Weiterleitungseinheit (3) zur Gewinnung von Verbindungsdaten der mindestens einen Datenverbindung aufgebaut wird.

8. Erkennungsverfahren nach einem der Ansprüche 5 bis 7, **dadurch gekennzeichnet, dass** es sich bei den Verbindungsdaten um mindestens zwei Verbindungsanfrageantworten der Zieleinheit (2) handelt, wobei sich die zur Übertragung der Verbindungsantworten genutzten Weiterleitungseinheiten (3) mindestens teilweise unterscheiden.

9. Erkennungsverfahren nach einem der Ansprüche 5 bis 8, **dadurch gekennzeichnet, dass** es sich bei den Verbindungsdaten um mindestens zwei Verbindungsanfrageantworten der Zieleinheit (2) handelt, die eine Datenverarbeitungseinheit (6) zu unterschiedlichen Zeitpunkten angefordert hat.

10. Erkennungsverfahren nach einem der Ansprüche 5 bis 9, **dadurch gekennzeichnet, dass** es sich bei den Verbindungsdaten um charakteristische Wegpunkte der Datenverbindungen von einer Datenverarbeitungseinheit (6) über die mindestens eine Weiterleitungseinheit (3) zu der Zieleinheit (2) handelt.

11. Erkennungsverfahren nach einem der vorhergehenden Ansprüche, **dadurch gekennzeichnet, dass** das sichere Datennetz (5) eine Zielsicherheitsinformation und/oder eine Wegsicherheitsinformation an die Anfrageeinheit (1) sendet.

12. Erkennungsverfahren nach einem der vorhergehenden Ansprüche, **dadurch gekennzeichnet, dass** die Anfrageeinheit (1) zu dem sicheren Datennetz (5) gehört und so für eine andere Anfrageeinheit die Aufgaben einer Datenverarbeitungseinheit (6) ausführen kann.

13. Erkennungsverfahren nach einem der vorhergehenden Ansprüche, **dadurch gekennzeichnet, dass** zum Aufbau der sicheren Verbindung zwischen der Anfrageeinheit (1) und der mindestens einen Datenverarbeitungseinheit (6) der Benutzer der Anfrageeinheit (1) authentifiziert wird.

14. Erkennungssystem, mit einer Anfrageeinheit (1), mindestens einer Datenverarbeitungseinheit (6), die durch ein sicheres Datennetz (5) verbindbar sind, wobei die Anfrageeinheit (1) mit mindestens einer Authentifizierungsvorrichtung verbunden ist und Mittel aufweist, um über eine sichere Verbindung (5) Daten mit mindestens einer Datenverarbeitungseinheit (6) auszutauschen, und wobei die mindestens eine Datenverarbeitungseinheit (6) Mittel aufweist um, über eine sichere Verbindung Daten mit mindestens einer anderen Datenverarbeitungseinheit (6) und mit der Anfrageeinheit (1) auszutauschen, **dadurch gekennzeichnet, dass** sowohl die Anfrageeinheit (1) als auch die Datenverarbeitungseinheit (6) Mittel aufweisen, um ein Erkennungsverfahren nach einem der Ansprüche 1 bis 13 durchzuführen.

15. Computerprogrammprodukt zur Benutzung in einem sicheren Datennetz (5) oder auf einer Datenverarbeitungseinheit (6), wobei das Computerprogrammprodukt ein oder mehrere computerlesbare Medien umfasst, die computerausführbare Anweisungen auf sich gespeichert haben, die, wenn sie durch einen Prozessor ausgeführt werden, das sichere Datennetz (5) oder die Datenverarbeitungseinheit (6) dazu veranlassen, das Verfahren gemäß der Ansprüche 1 bis 13 auszuführen.
